# EUROPEAN PATENT APPLICATION

(11) **EP 2 296 187 A2**
(43) Date of publication of application: **16.03.2011**
(21) Application number: 09754653.5
(22) Date of filing: 25.05.2009
(51) Int. Cl.: H01L 31/04, H05B 41/32

(54) **DEVICE FOR GENERATING SIMULATED SOLAR LIGHT FOR SOLAR BATTERY CHARACTERISTIC MEASUREMENT AND METHOD OF GENERATING SIMULATED SOLAR LIGHT**

(30) Priority: 26.05.2008 JP 2008136773
(71) Applicant: NPC Incorporated, Arakawa-ku Tokyo 116-0003 (JP)
(72) Inventor: HASHIMOTO, Toru, Tokyo 116-0003 (JP); TOGAWA, Yoshimasa, Tokyo 116-0003 (JP); ITO, Tomoaki, Tokyo 116-0003 (JP); NAKANISHI, Yuji, Tokyo 116-0003 (JP)
(74) Representative: Samson & Partner
(86) International application number: PCT/JP2009/059530
(87) International publication number: WO 2009/145145

(57) **Abstract**

[OBJECT]

A pseudo solar light generation apparatus using a switching system, capable of increasing electric power, measuring accurate I-V characteristic of a high-efficiency solar cell, and lengthening a time for maintaining an arc discharge of a lamp is provided.

[ORGANIZATION]

Electric power is supplied from a charging power supply 12 connected to a commercial power supply 11 to an electric double layer capacitor and power control circuit 20 by a charge control of a control circuit 70, and a charge is performed. After the charge of the electric double layer capacitor and power control circuit 20 is finished, the control circuit 70 controls a switching type boosting power supply circuit 30 to store a predetermined voltage in a load smoothing capacitor 38, and lighting of a flash lamp 50 is performed.

## Description

### [Technical Field]

The present invention relates to a pseudo solar light generation apparatus and a pseudo solar light generation method for a solar cell characteristic measurement.

### [Background]

Conventionally, a method in which pseudo solar light is irradiated and I-V characteristic of a solar cell at that time are measured has been taken in a solar cell I-V characteristic measurement.

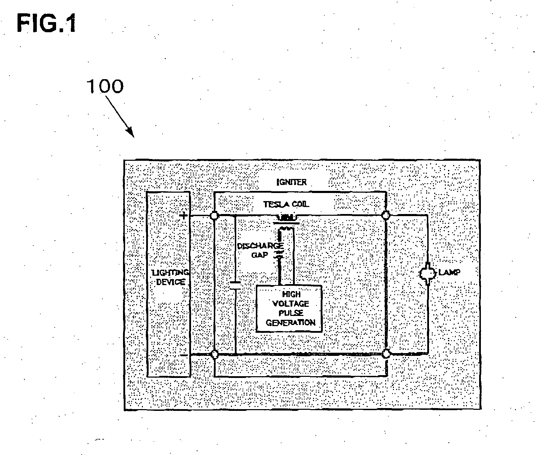

FIG 1 is an explanatory view illustrating a conventionally used direct-current lighting discharge lamp lighting device 100 (refer to Non-Patent Document 1). As illustrated in FIG 1, the direct-current lighting discharge lamp lighting device 100 is made up of a lamp, an igniter starting (dielectric breakdown) the lamp and performing a transition to an arc discharge, and a lighting device controlling a lamp current to maintain the arc discharge.

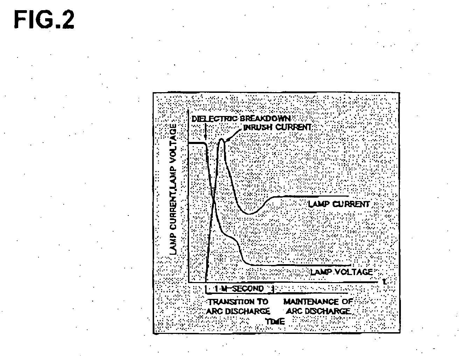

Besides, FIG 2 is a graphic chart representing a relationship between elapsed time and the lamp current and a lamp voltage. In FIG 2, the time until the lamp current and the lamp voltage become stable is the transition to the arc discharge, and the time when both of them are stable is the maintenance of the arc discharge.
A solar cell I-V characteristic measurement is performed while the lamp maintains the arc discharge, and therefore, the time when the arc discharge is maintained is preferable to be long.

Note that a series pass (dropper) system capable of high-speed response is used as the lighting device controlling the lamp current, and a switching system capable of expecting a small-sizing and light-weighting is not much used because a response characteristic thereof is not enough and it is difficult to increase electric power.
[Non-Patent Documentl]
   Optical Technology Information Magazine "Light Edge" No. 15 Special Issue, Discharge Lamp (published November, 1998)

### [Disclosure of the Invention]

### [Problems to Be Solved by the Invention]

However, when a commercial power supply is set at a predetermined voltage by a transformer, the voltage is rectified by a diode, and used as a direct-current by a smoothing capacitor in an I-V characteristic measurement of a large-sized solar cell developed in recent years a circuit scale becomes large-sized to correspond to an instant large power.
Besides, in recent years, a high-efficiency solar cell has been invented and developed in which an I-V characteristic measurement performance taking several hundred milli-second for measurement is required. There has been a problem in which capacity of a capacitor is small and the time maintaining the arc discharge becomes very short by using a conventional flash discharge lamp as a solar light generation apparatus corresponding to the I-V characteristic measurement of the high-efficiency solar cell. Accordingly, it is conceivable to lengthen the time for maintaining the arc discharge by enlarging the capacity of the capacitor storing electric power, but it is not practical because the circuit scale of the lighting device becomes large.
Further, there has been a problem in the flash discharge lamp in which irradiance necessary for the I-V characteristic measurement is not constant because the irradiance changes largely as time goes, and as a result, an accurate measurement of the high-efficiency solar cell cannot be performed.

In consideration of the above-stated problems, an object of the present invention is to provide a pseudo solar light generation apparatus and a pseudo solar light generation method capable of increasing electric power, performing the accurate I-V characteristic measurement of the high-efficiency solar cell, and lengthening the time for maintaining the arc discharge of the lamp while using the switching type power supply system.

### [Means for Solving the Problems]

According to the present invention, a pseudo solar light generation apparatus for a solar cell characteristic measurement, including: a flash lamp; a switching type boosting power supply circuit; a light emitting intensity detection sensor; a charging power supply; a control circuit controlling a charge and discharge, a voltage, a current and light intensity; a current detector; a class D amplifier circuit; an amplifier output control circuit; and an electric double layer capacitor and power control circuit, is provided.

The light emitting intensity detection sensor may be a spectral sensitivity sensor of which spectral sensitivity is equal to that of a solar cell being a measurement object.

The flash lamp may include a reflective mirror, a condenser, and an optical fiber connected to the condenser.

According to another aspect of the present invention, a pseudo solar light generation method for a solar cell characteristic measurement, including: performing a charge of an electric double layer capacitor by a charging power supply; lighting a flash lamp by a discharge from the electric double layer capacitor; performing a constant current control of a current at a current detector by a control circuit controlling a charge and discharge, a voltage, a current and light intensity; controlling the light intensity of the flash lamp to a target amount by the control circuit; and finishing the lighting of the flash lamp by terminating the discharge from the electric double layer capacitor after a predetermined time passed, is provided.

### [Effect of the Invention]

According to the present invention, a pseudo solar light generation apparatus capable of increasing electric power, performing an accurate I-V characteristic measurement of a high-efficiency solar cell, and lengthening a time for maintaining an arc discharge of a lamp while using a switching type power supply system is provided.
Namely, a high-capacity electric double layer capacitor is used for a lighting device for a pseudo solar light generation, and thereby, it is possible to downsize a power supply. Besides, the electric double layer capacitor having a large storage capacity is used, and thereby, it becomes possible to extend a lighting time of the lighting device which has been conventionally short, up to a necessary and sufficient time.
Further, a negative feedback control is smoothly performed and irradiance is stabilized by applying the negative feedback control and a class D amplifier system used in continuous lighting for illuminance at the lighting time.

### [Brief Description of the Drawing]

[FIG. 1]
   FIG. 1 is an explanatory view illustrating a direct-current lighting discharge lamp lighting device 100.
[FIG. 2]
   FIG 2 is a graphic chart representing a relationship between elapsed time and a lamp current and a lamp voltage.
[FIG.3]

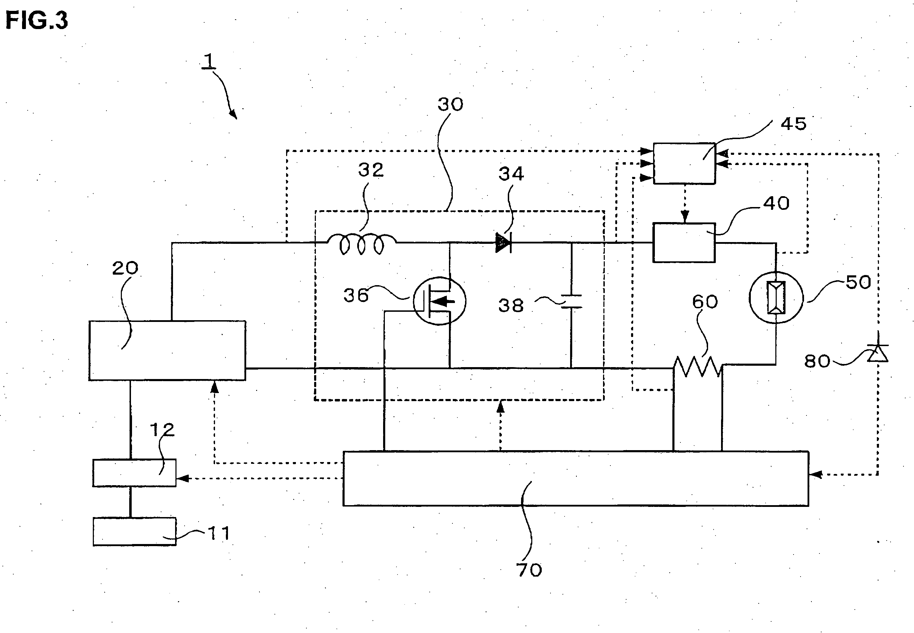

   FIG 3 is an explanatory view of a pseudo solar light generation apparatus 1.
[FIG. 4]

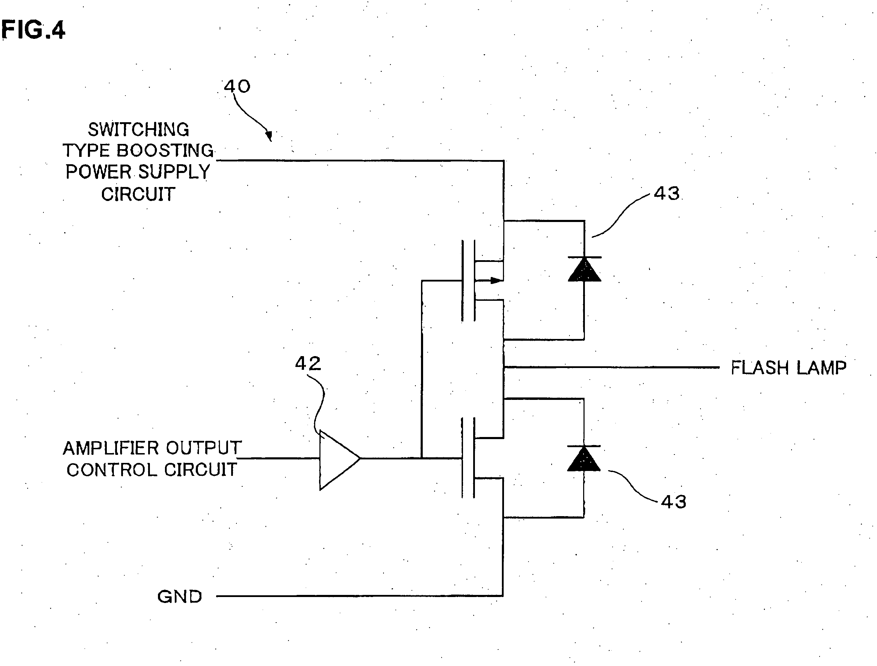

   FIG 4 is an explanatory view explaining a configuration of a class D amplifier circuit 40.
[FIG. 5]

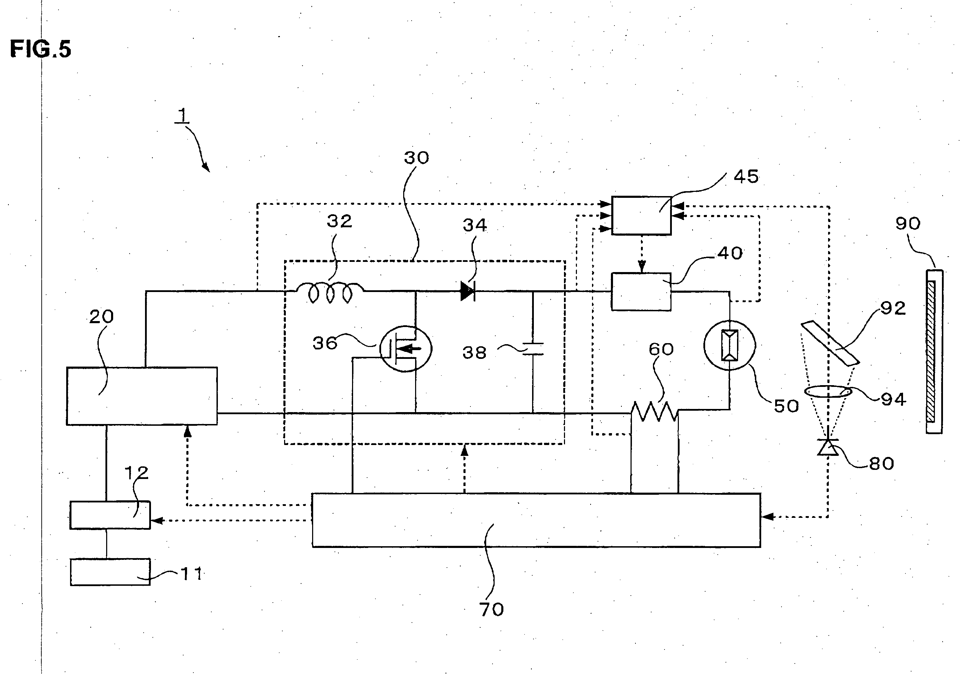

   FIG 5 is an explanatory view explaining an embodiment when a low reflectance dielectric mirror 92 and a convex surface reflective condenser lens 94 are provided.
[FIG. 6]

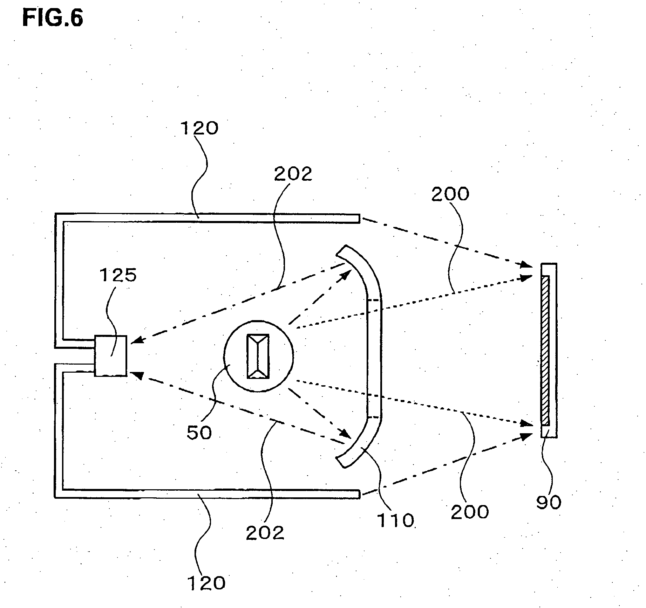

   FIG 6 is an explanatory view of a light intensity detection method using an optical fiber.

### [Explanation of Codes]

- 1: pseudo solar light generation apparatus
- 11: commercial power supply
- 12: charging power supply
- 20: electric double layer capacitor and power control circuit
- 30: switching type boosting power supply circuit
- 32: boosting inductor
- 34: backflow preventing diode
- 36: switching element
- 38: load smoothing capacitor
- 40: class D amplifier circuit
- 45: amplifier output control circuit
- 50: flash lamp
- 60: current detector
- 70: control circuit
- 80: light emitting intensity detection sensor
- 90: solar cell
- 100: direct-current lighting discharge lamp lighting device
- 110: reflective condenser mirror
- 120: optical fiber
- 125: fiber light receiver
- 200: light
- 202: light flux

### [Best Mode for Carrying out the Invention]

Hereinafter, embodiments of the present invention are described with reference to the drawings. Note that the same reference numerals and symbols are added to components having substantially the same function in the specification and the drawings, and redundant description thereof is not given.

FIG 3 is an explanatory view of a pseudo solar light generation apparatus 1 for solar cell characteristic measurement according to the embodiment of the present invention.
As illustrated in FIG 3, the pseudo solar light generation apparatus 1 is made up of a commercial power supply 11, a charging power supply 12, an electric double layer capacitor and power control circuit 20, a switching type boosting power supply circuit 30, a class D amplifier circuit 40, an amplifier output control circuit 45, a flash lamp 50, a current detector 60, a control circuit 70, and a light emitting intensity detection sensor 80.

Here, the switching type boosting power supply circuit 30 is made up of a boosting inductor 32, a backflow preventing diode 34, a switching element 36, and a load smoothing capacitor 38. Besides, the control circuit 70 is a circuit controlling a charge and discharge, a voltage, a current, and light intensity.

Hereinafter, a constitution of the pseudo solar light generation apparatus 1 is described.
The commercial power supply 11 is connected to the charging power supply 12, and the charging power supply 12 is connected to the electric double layer capacitor and power control circuit 20. The flash lamp 50 is connected to the electric double layer capacitor and power control circuit 20, and it is lighted when the current flows. Here, the switching type boosting power supply circuit 30, the class D amplifier circuit 40, and the current detector 60 are provided on an electric circuit to light the flash lamp 50. Note that the class D amplifier circuit 40 is provided at upstream side (or at downstream side) of the flash lamp 50, the current detector 60 is provided at downstream side (or at upstream side) of the flash lamp 50 respectively, and the switching type boosting power supply circuit 30 is provided to be connected to an upstream side and a downstream side of the electric double layer capacitor and power control circuit 20.

Besides, the control circuit 70 performs a charge control of the charging power supply 12, a discharge control of the electric double layer capacitor and power control circuit 20, and a control of the switching type boosting power supply circuit 30. On the other hand, the amplifier output control circuit 45 has a constitution controlling the class D amplifier circuit 40 by a voltage value output from the electric double layer capacitor and power control circuit 20, a voltage value output from the switching type boosting power supply circuit 30, a voltage value of the flash lamp 50, and light intensity information output from the light emitting intensity detection sensor 80. Note that the present invention relates to a case when the flash lamp 50 is lighted, namely, when the flash lamp 50 performs a maintenance of an arc discharge, and therefore, an igniter (flash lamp lighting trigger circuit) performing a transition to the arc discharge is not illustrated in the drawing.

Pseudo solar light is generated as described below in the pseudo solar light generation apparatus 1 constituted as stated above.
At first, electric power is supplied from the charging power supply 12 connected to the commercial power supply 11 to the electric double layer capacitor and power control circuit 20 and a charge is performed by the charge control of the control circuit 70. After the charge of the electric double layer capacitor and power control circuit 20 is finished, the switching type boosting power supply circuit 30 is controlled by the control circuit 70, a predetermined voltage is stored at the load smoothing capacitor 38, and a lighting preparation of the flash lamp 50 is finished.

After the lighting of the flash lamp 50 is started, a state of the flash lamp 50 shifts from the transition to the arc discharge by the not-illustrated igniter to the maintenance of the arc discharge. Here, the shift to the maintenance of the arc discharge is performed by the current discharged from the electric double layer capacitor and power control circuit 20 by the control of the control circuit 70. Further, a measurement value of the current detector 60 measuring a current value supplied to the flash lamp 50 is measured as needed to continue the maintenance of the arc discharge. When the current measurement value received by the control circuit 70 is lowered, the current flowing to the flash lamp 50 is increased by controlling the switching element 36 by the control circuit 70 to perform the control to keep a constant current. Note that the class D amplifier circuit 40 is provided between the switching type boosting power supply circuit 30 and the flash lamp 50 so as to correspond to a transient response in the present embodiment.

Besides, the control circuit 70 receives the light intensity information from the light emitting intensity detection sensor 80, and performs a control to keep the light intensity of the flash lamp 50 constant by controlling the switching element 36 when it is judged that the light intensity of the flash lamp 50 is low from the light intensity information.
Here, a value of the constant current in the above-stated constant current control by the control circuit 70 is defined in the light intensity control so that the light intensity of the flash lamp 50 becomes a predetermined light intensity.

The flash lamp 50 is lighted for a predetermined time during a period when the maintenance of the arc discharge continues, the power supply from the electric double layer capacitor and power control circuit 20 is stopped by the control circuit 70 after the predetermined time has passed, and the lighting of the flash lamp 50 is finished in the above-stated process. When the flash lamp 50 is lighted, the solar cell characteristic measurement is performed. After that, the solar cell characteristic measurement is performed again by repeating the above-stated process again.

Here, the class D amplifier circuit 40 is described below with reference to the drawings. The class D amplifier circuit 40 provided at upstream of the flash lamp 50 (at downstream of the switching type boosting power supply circuit 30) is provided as a countermeasure against a slow transient response of a switching type power supply.

In general, the switching type power supply is used for a usage of which transient characteristic does not become an issue. There is a possibility in which an electric charge of the load smoothing capacitor 38 of the switching type boosting power supply circuit 30 flows into the flash lamp 50 (load), and an excessive current flows because of the slow transient response of the switching type power supply, when the class D amplifier circuit 40 is not provided although a large power operation is required in the present embodiment. An increase of the voltage becomes slow at a constant current operation time because a load voltage changes from a low state to a high state (load impedance increases). Besides, an excessive voltage occurs when the load current decreases rapidly at a constant voltage operation time. Further, there is a possibility in which large energy at a transient time breaks down or deteriorates the load, or makes the load unstable.

In the present embodiment, the class D amplifier circuit 40 is therefore provided between the switching type boosting power supply circuit 30 and the flash lamp 50 (load) to correspond to the transient response as illustrated in FIG 3. Besides, the amplifier output control circuit 45 controlling an output of the class D amplifier circuit 40 is provided in accordance with the provision of the class D amplifier circuit 40.

FIG. 4 is an explanatory view explaining a constitution of the class D amplifier circuit 40. As illustrated in FIG 4, the class D amplifier circuit 40 is made up of a gate-drive amplifier 42 and two MOSFETs 43.
The class D amplifier circuit 40 inputs the voltage output from the switching type boosting power supply circuit 30, and controls the voltage to the flash lamp 50 in accordance with the control of the amplifier output control circuit 45 to solve the above-stated problems.

Here, the amplifier output control circuit 45 is a circuit controlling the output of the class D amplifier circuit 40 so as not to apply the excessive current and the excessive voltage to the flash lamp 50 (load), and it can also be constituted by a microprocessor such as a generally known digital signal processor. As a concrete control thereof, the transient response is estimated from the voltage value output from the electric double layer capacitor and power control circuit 20, the voltage value output from the switching type boosting power supply circuit 30, the voltage value of the flash lamp 50, and the light intensity information output from the light emitting intensity detection sensor 80, to control the output of the class D amplifier circuit 40.

The amplifier output control circuit 45 has a partial responsibility for the transient response of the switching type power supply, and thereby, it becomes possible to minimize power consumption of the class D amplifier circuit 40 and to use the switching type power supply without taking any consideration for the transient characteristic thereof.
It is possible to prevent an inrush current to the load caused by the electric charge of the load smoothing capacitor 38 by adding a discharging and absorbing constant current characteristic to the class D amplifier circuit 40 and to suppress an overshoot owing to the current absorbing characteristic. It is possible to set the load smoothing capacitor 38 at an object maximum voltage, and to perform a stable control by the class D amplifier circuit 40 with absorbing 1, 2, 3 quadrant types constant voltage constant current characteristic.
Load fluctuation and a response thereof are nonlinear states, and a DSP and so on is used to control response characteristic optimally by predictively controlling the transient response in a digital manner because an object characteristic is not attained by an analog control method.

Hereinabove, an example of the embodiment of the present invention is described, but the present invention is not limited to the illustrated embodiment. It is obvious that those skilled in the art are able to figure out various changed examples or modified examples within the range of the following claims, and it is to be understood that all those changes and modifications are to be included in the technical scope of the present invention.

For example, the switching type boosting power supply circuit 30 is controlled by the current supplied to the flash lamp 50 and the value of the light intensity of the flash lamp 50, to control the light intensity of the flash lamp 50 to be constant in the above-stated embodiment.
However, the irradiance of the light of the flash lamp 50 is not in proportion at whole irradiation area. This is because the light emitting intensity detection sensor 80 detects only a part of the irradiated light of the flash lamp 50. Accordingly, it is more desirable that all of the light intensity is controlled by signals in proportion to the light intensity at the whole irradiation area of the flash lamp 50 to further enhance the stability of the irradiance in the above-stated embodiment of the present invention.

FIG. 5 is an explanatory view explaining a case when a low reflectance mirror 92 and a condenser lens 94 are provided in the above-stated embodiment. At this time, the low reflectance mirror 92 is, for example, a surface reflecting mirror.
As illustrated in FIG 5, the low reflectance mirror 92 is provided between the flash lamp 50 and a solar cell 90, and the condenser lens 94 is provided between the low reflectance mirror 92 and the light emitting intensity detection sensor 80.

The light at the whole irradiation area irradiated from the flash lamp 50 is reflected by the low reflectance mirror 92, condensed by the condenser lens 94, and of which light intensity is detected by the light emitting intensity detection sensor 80. The detected light intensity information is transmitted to the control circuit 70, and the light intensity of the flash lamp 50 is controlled to be constant based on the light intensity information.
Particularly, in case of a solar simulator in which a whole is uniformized by using an integral lens or the like, an effect to perform the light intensity detection by using the light at the whole irradiation area is large because there is a local small fluctuation.

A spectral distribution of the flash lamp 50 fluctuates as time goes. This fluctuation cannot be stabilized by a negative feedback at the whole area. Accordingly, there is a possibility in which fluctuation occurs in the solar cell output. It is preferable that a spectral sensitivity at the time of the light intensity detection and a spectral sensitivity of a measurement object (here, the solar cell 90) are made approximately equal, to minimize an effect of the spectral fluctuation by applying the negative feedback.

As a concrete method thereof, it is conceivable that a spectral sensitivity sensor having the spectral sensitivity similar to the solar cell 90 is used instead of the light emitting intensity detection sensor 80 in the above-stated embodiment. In this case, it becomes possible to minimize the effect of the spectral fluctuation because the spectral distributions of both are approximately the same.
Besides, it is also conceivable to provide a filter to equalize the spectral distribution of the light detected at the light emitting intensity detection sensor 80 with the spectral distribution of the solar cell 90 at a detection part of the light emitting intensity detection sensor 80 in the above-stated embodiment. In this case, it becomes possible to minimize the effect of the spectral fluctuation because the light emitting intensity detection sensor 80 detects the light intensity only within a range of the same spectral with the spectral distribution of the solar cell 90 via the filter.

On the other hand, the light emitted from the flash lamp 50 is optically guided to the irradiation area by using reflection and refraction. Accordingly, light flux which is difficult to be guided to the irradiation area is wasted. It is therefore desirable to guide the light flux to be wasted to the irradiation area by changing an optical path thereof by condensing the light flux to an optical fiber. It is described below with reference to the drawings.
FIG 6 is an explanatory view of a light intensity detection method using the optical fiber. A reflective condenser mirror 110 is provided between the flash lamp 50 and the solar cell 90, and a fiber light receiver 125 to which the optical fiber 120 is connected is provided at an opposite side of the reflective condenser mirror 110 relative to the flash lamp 50. Note that a center portion of the reflective condenser mirror 110 has a structure transmitting the light of the flash lamp 50, and a tip output direction of the optical fiber is a direction of the solar cell 90.

Irradiation of light 200 (dotted arrows in FIG 6) heading from the flash lamp 50 to the solar cell 90 is the same as the above-stated embodiment. On the other hand, light flux 202 (dashed arrows in FIG. 6) which is difficult to guide to the irradiation area from the flash lamp 50 is reflected by the reflective condenser mirror 110, and the light flux 202 is condensed to a fiber light receiver 125. The optical fiber 120 is connected to the fiber light receiver 125, and the condensed light is output from a tip portion of the optical fiber 120. The direction of the light output from the optical fiber 120 can be controlled, and the light is irradiated toward a portion where an irradiation light intensity is low at the solar cell 90.
Accordingly, it becomes possible to improve a local lack of uniformity of the irradiation illuminance of the light from the flash lamp 50 relative to the solar cell 90.

### [IndustrialApplicability]

The present invention is applicable to a pseudo solar light generation apparatus and a pseudo solar light generation method for a solar cell characteristic measurement.

## Claims

1. A pseudo solar light generation apparatus for a solar cell characteristic measurement, comprising:
a flash lamp;
a switching type boosting power supply circuit;
a light emitting intensity detection sensor;
a charging power supply;
a control circuit controlling a charge and discharge, a voltage, a current and light intensity;
a current detector;
a class D amplifier circuit;
an amplifier output control circuit; and
an electric double layer capacitor and power control circuit.

2. The pseudo solar light generation apparatus according to claim 1,
wherein the light emitting intensity detection sensor is a spectral sensitivity sensor of which spectral sensitivity is equal to a solar cell being a measurement object.

3. The pseudo solar light generation apparatus according to claim 1,
wherein the flash lamp includes a reflective mirror, a condenser, and an optical fiber connected to the condenser.

4. A pseudo solar light generation method for a solar cell characteristic measurement, comprising:
performing a charge of an electric double layer capacitor by a charging power supply;
lighting a flash lamp by a discharge from the electric double layer capacitor;
performing a constant current control of a current at a current detector by a control circuit controlling a charge and discharge, a voltage, a current and light intensity;
controlling the light intensity of the flash lamp to a target amount by the control circuit; and
finishing the lighting of the flash lamp by terminating the discharge from the electric double layer capacitor after a predetermined time passed.
